(19)

Europäisches
Patentamt
European
Patent Office
Office européen
des brevets

(11) **EP 3 447 523 A1**

(12) **EUROPEAN PATENT APPLICATION**

(43) Date of publication:
**27.02.2019 Bulletin 2019/09**

(51) Int Cl.:
*G01S 7/481* (2006.01)       *G01S 17/88* (2006.01)
*G01S 5/16* (2006.01)        *G01S 13/86* (2006.01)
*G01S 13/87* (2006.01)       *G01S 13/88* (2006.01)
*G01S 17/42* (2006.01)       *G01S 17/89* (2006.01)
*G01S 17/93* (2006.01)       *G01S 7/48* (2006.01)
*G01S 7/486* (2006.01)

(21) Application number: **18187982.6**

(22) Date of filing: **08.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2017   KR 20170105671
20.09.2017   KR 20170121401
21.09.2017   KR 20170121828
02.11.2017   KR 20170145577**

(71) Applicant: **Yujin Robot Co., Ltd.
Incheon, 22013 (KR)**

(72) Inventors:
• **SHIN, Kyung Chul**
  **03010 Seoul (KR)**
• **PARK, Seong Ju**
  **15820 Gyeonggi-do (KR)**
• **LEE, Jae Young**
  **Gyeonggi-do, 15804 (KR)**
• **CHEON, Moo Woong**
  **13903 Gyeonggi-do (KR)**

(74) Representative: **Capasso, Olga et al
De Simone & Partners SpA
Via Vincenzo Bellini, 20
00198 Roma (IT)**

(54) **DISTANCE MEASURING APPARATUS, TIME TO DIGITAL CONVERTER, AND MOVING OBJECT**

(57)     The exemplary embodiments provide a flight time based distance measuring device and a moving object which transmits and receives light to output an electrical signal, converts the electrical signal to generate a control signal, adjusts a position of the logical elements included in a plurality of oscillators to adjust clock widths of the plurality of oscillators, and calculates a time difference of the control signal, to improve a time resolution.

[FIG. 3]

EP 3 447 523 A1

**Description**

**TECHNICAL FIELD**

The present disclosure relates to a distance measuring apparatus which measures a distance by calculating a flight time, a time to digital converter, and a moving object.

**BACKGROUND ART**

The contents described in this section merely provide background information on the present exemplary embodiment but do not constitute the related art.

A light detection and ranging (LIDAR) is a device which transmits a laser signal, measures a returning time of flight (TOF) of a reflected signal, and measures a distance to the reflector using a speed of light.

A method of measuring a flight time includes a phase shifting method, an equivalent time sampling method, a direct measuring method using a high resolution clock, and a time measuring method using a plurality of delay elements.

According to the phase shifting method, a transmitting unit consistently transmits a sign wave and a receiving unit measures the flight time using a phase shift. However, the method has a problem in that a sampling rate is restricted according to a period of the sign wave and wrong flight time is calculated due to a cross-talk.

The equivalent time sampling method is applied to an oscilloscope to reconstruct the entire signal by repeatedly reading the signal with a time difference. In this method, the sampling rate is low so that it is restricted to detect an obstacle which moves at a high speed or to be used for a moving object.

The direct measuring method using a high resolution clock measures a flight time using a clock which operates at several GHz. However, according to this method, the clock speed cannot be physically sufficiently increased, so that there is a limitation in improving a time resolution.

According to the time measuring method using a plurality of delay elements, the time difference is calculated using a time to digital converter (TDC). In the time to digital converter of the related art, a buffer has a time delay of tens to several hundreds of pico seconds (ps). When a flip flop operates using a stop signal, the time delay is equal to the number of flip flops having a value of a logic high 1. That is, the sum of delay times has the same value as the flight time. Such a method depends on a time delay through a buffer and cannot have a linear time resolution due to the FPGA characteristic. Further, a large amount of delay lines needs to be sequentially positioned in the FPGA, so that a space for implementing in the FPGA and the number of elements are limited.

**SUMMARY OF THE INVENTION**

A main object to be achieved by the present disclosure is to change a position of a logical element included in a plurality of oscillators to adjust a clock width of the plurality of oscillators, thereby improving a time resolution of a time to digital converter.

Another object to be achieved by the present disclosure is to correct a flight time using a ratio of a number of reference clocks received from an external clock generator and a number of internal clocks generated in an internal oscillator, thereby exactly calculating a flight time.

Other and further objects of the present disclosure which are not specifically described can be further considered within the scope easily deduced from the following detailed description and the effect.

According to an aspect of the present exemplary embodiment, a distance measuring apparatus includes: an optical transceiver which emits light to a target by a start control signal and receives light reflected from the target to convert the reflected light into an electrical signal; a signal discriminator which converts the electrical signal to generate a stop control signal, and a distance measuring unit which measures a distance by calculating a flight time using a time to digital converter which adjusts a position of a logical element included in an oscillator, based on a time difference of the start control signal and the stop control signal.

According to another aspect of the present exemplary embodiment, a time to digital converter includes: a slow oscillator which generates a first clock; a fast oscillator which generates a second clock which is smaller than the first clock; a coarse counter which counts the first clock of the slow oscillator; a fine counter which counts the second clock of the fast oscillator; and a phase detector which detects a timing when the first clock and the second clock are synchronized.

According to still another aspect of the present embodiment, a moving object includes a distance measuring apparatus which calculates a flight time between a moving object and a target to measure a distance to the target; and a moving device which is implemented to move the moving object based on the distance to the target and the distance measuring apparatus includes a distance measuring apparatus includes an optical transceiver which emits light to a target by a start control signal and receives light reflected from the target to convert the reflected light into an electrical signal; a signal discriminator which converts the electrical signal to generate a stop control signal; and a distance measuring unit which measures a distance by calculating a flight time using a time to digital converter which adjusts a position of a logical element included in an oscillator, based on a time difference of the start control signal and the stop control signal.

The slow oscillator and the fast oscillator may be combined by the same logical elements.

On a circuit, a clock width of the slow oscillator may be adjusted by changing positions and a signal path of the logical elements of the slow oscillator and a clock width of the fast oscillator may be adjusted by changing positions and a signal path of the logical elements of the fast oscillator to adjust a difference between the clock width of the slow oscillator and the clock width of the fast oscillator.

The signal discriminator may output a first signal and a second signal and the time to digital converter may calculate a first time difference based on the first signal and a second time difference based on the second signal, and share the slow oscillator or the fast oscillator in the circuit to calculate the first time difference and the second time difference.

The phase detector may be positioned to be closer than a predetermined distance from the shared slow oscillator or the shared fast oscillator.

The distance measuring unit may include a reference clock counter which counts a reference clock received from an external clock generator and counts an internal clock generated in an internal oscillator.

The distance measuring unit may correct the flight time using a ratio of the number of reference clocks and the number of internal clocks.

The distance measuring unit may include a plurality of time to digital converters.

The reference clock counter may be located between the plurality of time to digital converters.

As described above, according to the exemplary embodiment of the present disclosure, a position of a logical element included in a plurality of oscillators is adjusted to adjust a clock width of the plurality of oscillators, thereby improving a time resolution of a time to digital converter.

According to an exemplary embodiment of the present disclosure is to correct a flight time using a ratio of a number of reference clocks received from an external clock generator and a number of internal clocks generated in an internal oscillator, thereby exactly calculating a flight time.

Even if the effects are not explicitly mentioned here, the effects described in the following specification which are expected by the technical features of the present disclosure and their potential effects are handled as described in the specification of the present disclosure.

## BRIEF DESCRIPTION OF THE DRAWINGS

FIGS. 1 to 3 are views illustrating a moving object according to an exemplary embodiment of the present disclosure;

FIGS. 4 and 5 are block diagrams illustrating a distance measuring apparatus according to another exemplary embodiment of the present disclosure;

FIG. 6 is a view illustrating an electrical signal output from a photo diode;

FIGS. 7 and 8 are block diagrams illustrating an optical transceiver of a distance measuring apparatus according to another exemplary embodiment of the present disclosure;

FIG. 9 is a circuit diagram illustrating an optical transceiver according to another exemplary embodiment of the present disclosure;

FIG. 10 is a view illustrating a signal output from an optical transceiver according to another exemplary embodiment of the present disclosure;

FIG. 11 is a view illustrating a reflected signal received by a distance measuring apparatus;

FIG. 12 is a block diagram of a signal discriminator according to another embodiment of the present disclosure;

FIG. 13 is a view illustrating a signal input to a signal discriminator according to another exemplary embodiment of the present disclosure;

FIG. 14 is a view illustrating a signal converted by a signal discriminator according to another exemplary embodiment of the present disclosure;

FIG. 15 is a view illustrating a signal having a magnitude amplified by a signal discriminator according to another exemplary embodiment of the present disclosure;

FIG. 16 is a circuit diagram illustrating a time to digital converter of the related art;

FIG. 17 is a view illustrating a signal of a time to digital converter of the related art;

FIG. 18 is a view for explaining an operation of measuring a time by a time to digital converter according to another exemplary embodiment of the present disclosure;

FIG. 19 is a block diagram illustrating a time to digital converter according to another exemplary embodiment of the present disclosure;

FIG. 20 is a block diagram illustrating a ring oscillator of a time to digital converter according to another exemplary embodiment of the present disclosure;

FIG. 21 is a block diagram illustrating a time to digital converter according to another exemplary embodiment of the present disclosure;

FIG. 22 is a view illustrating that a time to digital converter according to another exemplary embodiment of the present disclosure is exemplarily implemented in an FPGA;

FIG. 23 is a block diagram illustrating a distance measuring apparatus according to another exemplary embodiment of the present disclosure; and

FIG. 24 is a view for explaining an operation of correcting a time by a distance measuring apparatus according to another exemplary embodiment of the present disclosure.

## DETAILED DESCRIPTION OF THE EMBODIMENT

Hereinafter, in the description of the present disclosure, a detailed description of the related known functions will be omitted if it is determined that the gist of the present disclosure may be unnecessarily blurred as it is obvious to those skilled in the art and some exemplary embodiments of the present disclosure will be described in detail with reference to exemplary drawings.

The LIDAR sensor according to the present exemplary embodiment may be applied to a distance measuring apparatus or a moving object. That is, the LIDAR sensor may be applied to products which require distance measurement, such as small appliances or a moving object such as drones or vehicles. The LIDAR sensor is a device which transmits a laser signal, measures a returning time of the reflected signal, and measures a distance to a reflector using a speed of light. The laser signal is converted into an electrical signal by a photo diode. The laser signal may have a predetermined wavelength band. For example, the laser signal may use an infrared wavelength band. The LIDAR sensor may be referred to as an optical transceiver.

<Moving object>

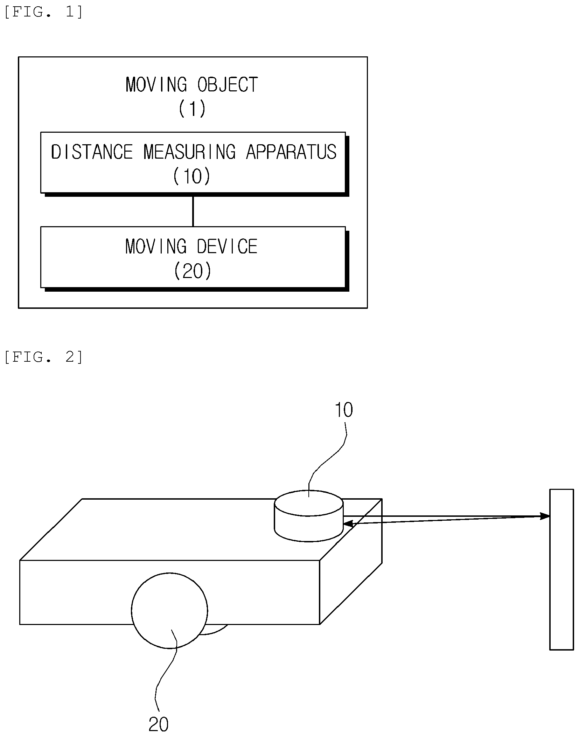

FIGS. 1 to 3 are views illustrating a moving object according to an exemplary embodiment of the present disclosure.

As illustrated in FIG. 1, a moving object 1 includes a distance measuring apparatus 10 and a moving device 20. The moving object 1 may omit some components among various components which are exemplarily illustrated in FIG. 1 or may further include other component. For example, the moving object may further include a cleaning unit.

The moving object 1 refers to a device designed to be movable from a specific location to another location according to a predetermined method and moves from the specific location to another location using a moving unit such as wheels, rails, or walking legs. The moving object 1 may collect external information using a sensor and then move according to the collected information or move using a separate manipulating unit by a user.

Examples of the moving object 1 include robot cleaners, toy cars, mobile robots for industrial or military purposes. The moving object 1 may travel using wheels or walk using one or more legs, or may be implemented by a combination thereof.

The robot cleaner is a device which sucks foreign matters such as dust accumulated on a floor while traveling a cleaning space to automatically clean the cleaning space. Differently from a normal cleaner which moves by an external force provided by a user, the robot cleaner moves using external information or a predetermined moving pattern to clean the cleaning space.

The robot cleaner may automatically move using a predetermined pattern or detect an external obstacles using a detecting sensor and then moves as it is detected. Further, the robot cleaner may move in accordance with a signal transmitted from a remote control device which is manipulated by the user.

The detecting sensor may be implemented by LIDAR. The LIDAR is a device which transmits a laser signal, measures a returning time of the reflected signal, and measures a distance to a reflector using a speed of light. The laser signal is converted into an electrical signal by a photo diode. The laser signal may have a predetermined wavelength band.

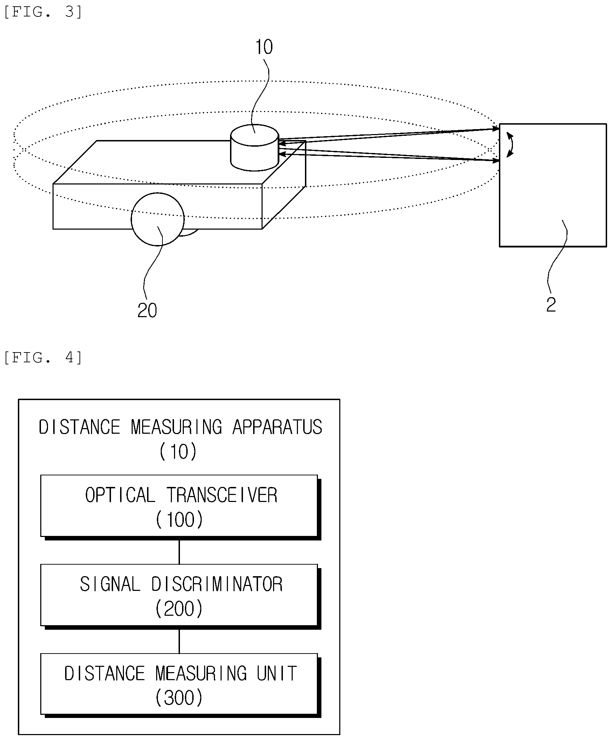

Referring to FIGS. 2 and 3, even though the distance measuring apparatus 10 which calculates a flight time between a moving object and a target to measure a distance to the target is located at an upper edge of the main body, it is merely illustrative and the present disclosure is not limited thereto. Further, one or more distance measuring apparatuses may be implemented in an appropriate location in accordance with an implemented design.

The distance measuring apparatus 10 transmits and receives light using a pair of light sources and a photo diode and three-dimensionally scans surroundings using a movable mirror and a rotor.

The distance measuring apparatus 10 may operate by a time of flight (TOF) manner. According to the time of flight manner, a laser emits a pulsed or square wave signal to measure a time when a reflection pulse or square wave signals from objects within a measurement range reach a receiver to measure a distance between an object to be measured and the distance measuring apparatus.

The moving device 20 calculates a driving path based on a distance to the target or detects an obstacle to move the moving object. The moving device 20 may move the moving object based on a relative location of an artificial mark. The moving device 20 may be implemented by a moving unit such as wheels, rails, or walking legs.

<Distance measuring apparatus>

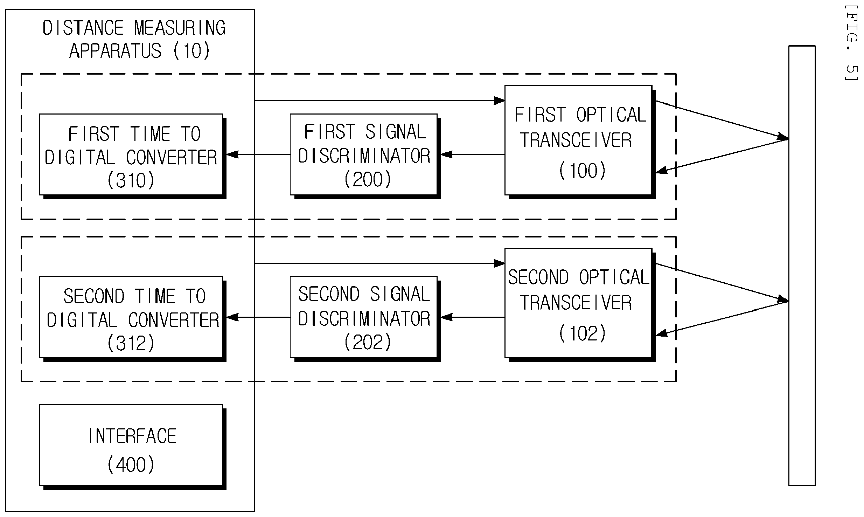

FIGS. 4 and 5 are views of a distance measuring apparatus according to exemplary embodiments of the present disclosure. The distance measuring apparatus is implemented in the moving object or independently operates. As illustrated in FIG. 4, the distance measuring apparatus 10 includes an optical transceiver 100, a signal discriminator 200, and a distance measuring unit 300. The distance measuring apparatus 10 may omit some components among various components which are exemplarily illustrated in FIG. 4 or may further include other component. For example, the distance measuring apparatus 10 may further include an interface 400.

The optical transceiver 100 transmits a laser signal and receives a reflected signal. The optical transceiver 100 emits light to a target by a start control signal and receives light which is reflected from the target to convert the light into an electrical signal. The optical transceiver 100 outputs the electrical signal during a predetermined detecting time.

The optical transceiver 100 converts light into a current or a voltage a circuit for buffering and scaling an output of the photo diode is necessary. For example, a trans impedance amplifier (TIA) may be connected to the photo diode. The trans impedance amplifier amplifies a current of the photo diode and converts the current into the voltage to output the voltage. The trans impedance amplifier may be classified into a resistive feedback TIA (R-TIA) and a capacitive feedback TIA (C-TIA).

The optical transceiver 100 may include a signal converter. The signal converter is connected to the photo diode of the optical transceiver 100 and the trans impedance amplifier is connected to the signal converter.

The light source emits light to the target based on a predetermined sampling period. The sampling period may be set by a controller of the distance measuring apparatus 10. The sampling period is a time when the optical transceiver 100 emits light and receives reflected light, and converts the light into an electrical signal in accordance with the start control signal. The optical transceiver 100 may repeatedly perform this operation in a next sampling period.

The photo diode receives light reflected from the target to convert the light into an electrical signal. The photo diode may be implemented by a PN junction photo diode, a PIN photo diode, or an avalanche photo diode (APD). The photo diode outputs the electrical signal until the photo carrier dissipates. Further, as the magnitude of the output signal is increased, it takes more time until the signal dissipates.

The signal discriminator 200 converts the electrical signal to measure an exact timing and output a control signal. The signal discriminator 200 converts the electrical signal such that a signal point having a maximum signal magnitude has a predetermined magnitude, adjusts an magnitude of the converted electrical signal, and detects a timing having the predetermined magnitude. The signal discriminator converts the electrical signal to generate a stop control signal.

The signal discriminator 200 receives the electrical signal from the photo diode or the trans impedance amplifier. The received electrical signal, that is, an input signal rises or falls by the reflected light. The signal discriminator exactly measures a target timing for the input signal to output the electrical signal.

The signal discriminator 200 differentiates the input signal or converts the input signal using a constant fraction discriminator (CFD). The constant fraction discriminator is a method which finds a timing when a timing when a signal obtained by delaying an original signal is equal to a signal adjusted by a predetermined magnitude ratio becomes a predetermined ratio of the maximum magnitude.

The signal discriminator 200 converts a slope of the input signal so that a signal point having the maximum signal magnitude has a predetermined magnitude. The signal discriminator 200 adjusts a magnitude of the converted input signal. The signal discriminator amplifies the magnitude of the converted input signal n times (N is a real number larger than 1). The signal discriminator performs a plurality of amplifying processes to convert the slope of the signal to be close to the vertical. Since the slope is large, even though the circuit is simply implemented only by the comparator, an exact timing may be obtained.

The distance measuring unit 300 measures a time and a distance by the time of flight manner. The distance measuring unit 300 calculates a flight time based on a time difference between the start control signal and the stop control signal to measure the distance. The distance measuring unit 300 calculates a distance from the time using the speed of light.

The distance measuring unit 300 may include one or more time to digital converters 310 and 31 which convert the difference of two hours into the digital value. The input signal of the time to digital converter may be a pulse shape of the same signal source or may be an edge of other signal source. For example, the distance measuring apparatus 10 may calculate the time difference based on a rising edge or a falling edge of the start control signal and a rising edge or a falling edge of the stop control signal.

The interface 400 is a communication path which transmits and receives information to and from other device (or a host). The other device accesses the distance measuring apparatus 10 through an interface to set a parameter. The distance measuring apparatus 10 may transmit the time and the distance measured through the interface to other device.

<Signal converter of optical transceiver>

The electrical signal output from the photo diode includes a noise in accordance which a circuit characteristic of the photo diode, magnitudes of the electrical signal are variety, and a signal output time is not uniform.

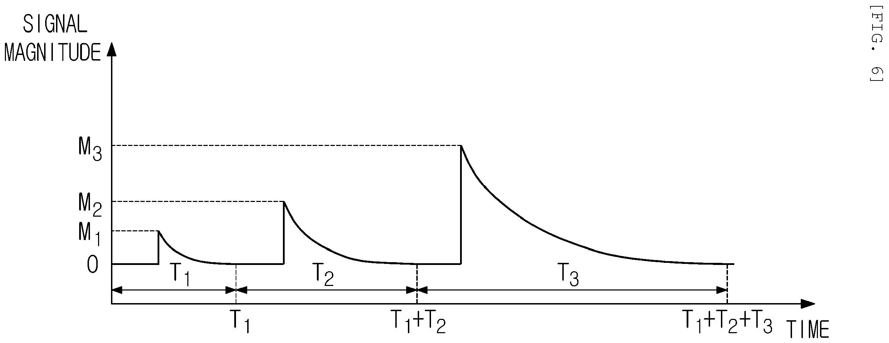

There is a problem in that the radar needs to be wait until a photo carrier of the photo diode dissipates even after the reflected laser signal passes through the photo diode. FIG. 6 illustrates an electrical signal output from the photo diode. As illustrated in FIG. 6, it takes considerable time until the electrical signal output from the photo diode dissipates. Specifically, as the magnitude of the output signal is increased, it takes more time until the signal dissipates.

The optical transceiver 100 may be implemented in the moving object or the distance measuring apparatus or independently operate.

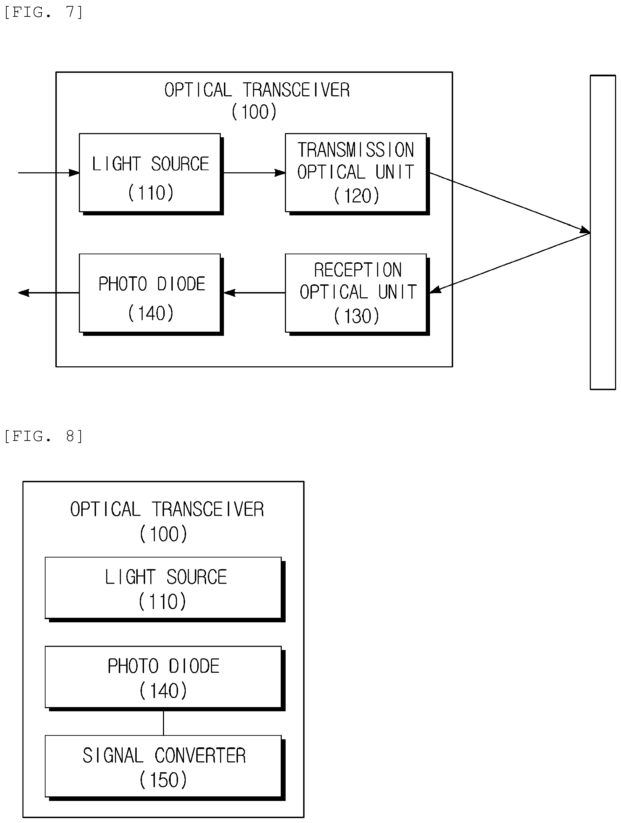

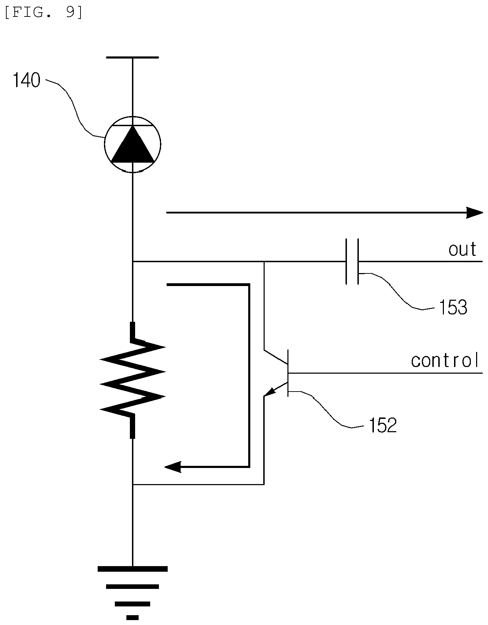

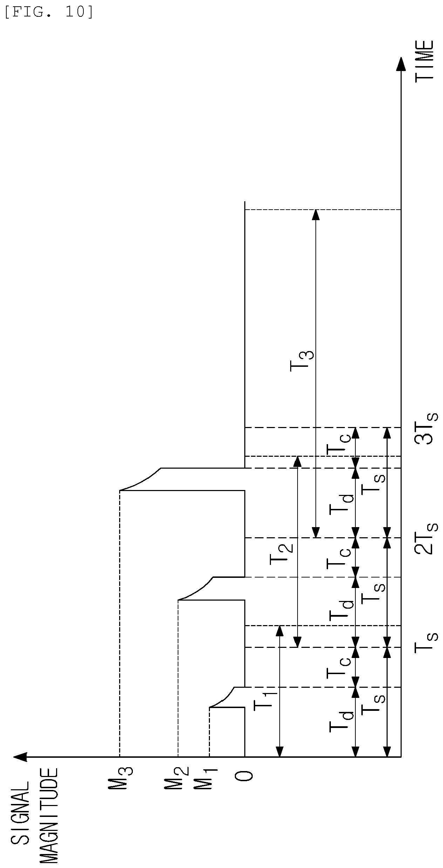

FIGS. 7 and 8 are block diagrams illustrating an optical transceiver, FIG. 9 is a circuit diagram illustrating an optical transceiver, and FIG. 10 is a view illustrating a signal output from the optical transceiver.

The optical transceiver 100 may include a transmission optical unit 120 and a reception optical unit 130. The transmission optical unit and the reception optical unit are paths of the laser signal and may be formed to have a body tube structure or may be a mirror. The optical transceiver 100 may simultaneously detect obstacles in the horizontal direction and a ground direction by setting angles of the plurality of mirrors to be different from each other. The obstacle may be detected in all directions by rotating the transmission optical unit and the reception optical unit. For example, the scan line may be set to be 45 degrees and 60 degrees and two or more scan lines may be configured. The optical transceiver 100 may include a rotating unit. The optical transceiver 100 performs horizontal scanning through the rotating unit.

As illustrated in FIG. 8, the optical transceiver 100 includes a light source 110, a photo diode 140, and a signal converter 150. The light transceiver 100 may omit some components among various components which are exemplarily illustrated in FIG. 8 or may further include other component. For example, the trans impedance amplifier may be connected to the signal converter 150.

The light source 110 emits light to the target based on a predetermined sampling period. The sampling period may be set by a controller of the distance measuring apparatus 10. The sampling period is a time when the optical transceiver 100 emits light and receives reflected light, and converts the light into an electrical signal in accordance with the start control signal. The optical transceiver 100 may repeatedly perform this operation in a next sampling period.

The photo diode 140 receives light reflected from the target to convert the light into an electrical signal. The photo diode 140 may be implemented by a PN junction photo diode, PIN photo diode, or an avalanche photo diode (APD). As illustrated in FIG. 6, the photo diode 140 outputs an electrical signal until photo carries dissipate. Further, as the magnitude of the output signal is increased, it takes more time until the signal dissipates.

The signal converter 150 outputs the electrical signal during a detecting time of the sampling period so as not to be limited to the dissipation time of the output signal. Referring to FIG. 9, the signal converter 150 may include a resistor 151, a switch 152, and a capacitor 153.

The resistor 151 is connected to the photo diode 140. One end of the resistor 151 is connected to the photo diode 140 and the other end of the resistor 151 is connected to the ground. The resistor 151 may be connected to an anode or a cathode of the photo diode 140.

When a resistance value is small, a waveform has a value which is not zero during a time similar to a time when the light passes through the photo diode 140, but there is a problem in that a magnitude of the output signal is small. Therefore, it is necessary to amplify a magnitude of the electrical signal using a resistor 15 having a value which is larger than a predetermined value. In this case, as illustrated in FIG. 1, a signal trailing phenomenon occurs.

In order to solve the signal trailing phenomenon, a transmission path of the electrical signal is changed through the switch 152. The optical transceiver 100 may output a signal from which a part of an area where the magnitude of the electrical signal is reduced is removed. Even though a rear end of the electrical signal is removed, the distance measuring apparatus 10 may measure a distance. This is because the signal discriminator 200 does not detect the ending point of the electrical signal, but detects a start timing and a maximum magnitude timing of the electrical signal to output a rising edge and a falling edge.

The switch 152 is connected to the resistor 151 in parallel to change the transmission path of the electrical signal. For example, the switch 152 may be implemented by a transistor.

Referring to FIG. 9, the switch 152 transmits the electrical signal to a first path during a detecting time Td of the sampling period Ts and transmits the electrical signal to a second path during a cut-off time Tc of the sampling period Ts. The first path is a path where the signal is transmitted through the capacitor 153 and the second path is a path where the signal is transmitted to the ground through the switch 152.

According to the exemplary embodiments, even though signal dissipation times T1, T2, and T3 are taken for the electrical signal output from the photo diode 140 due to the trailing phenomenon, the signal may be processed in accordance with the sampling period without waiting until the signal dissipates.

The distance measuring apparatus 10 adjusts the sampling period, calculates and sets an appropriate detecting time in accordance with the sampling period, and control an on/off operation of the switch 152. The controller of the distance measuring apparatus 10 may control an on/off operation of the switch by referring a sampling period, a detecting time, a cut-off time, a waveform of emitted light, an on/off time interval of a light source, a pulse width of a start control signal, a pulse width of a stop control signal, a rotation speed of the optical transceiver, a signal processing and waiting time of the signal discriminator and a time calculator.

The capacitor 153 is connected to a point where the photo diode 140 and the resistor 151 are connected to output an electrical signal. The capacitor 153 removes a DC component of the electrical signal. A non-inverting amplifier may be connected to a rear end of the capacitor 153.

<Signal discriminator>

As a method of calculating a peak time of the reflected signal in the LIDAR, there is a method of converting a signal to detect zero. However, the reflected signal includes a noise, so that a time when the magnitude of the signal becomes zero cannot be used as a target time. A zero crossing detector needs to be additionally implemented.

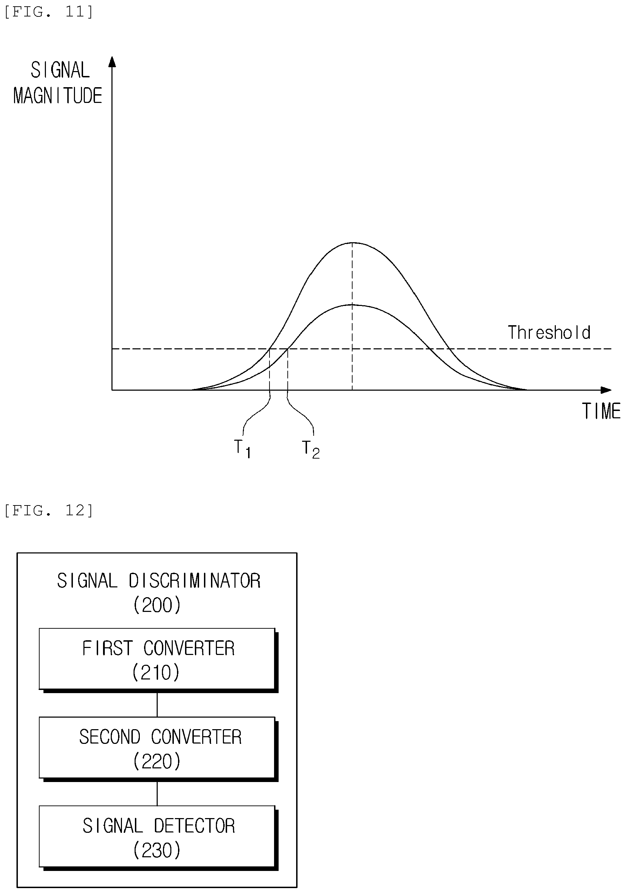

As a method of calculating a timing of the reflected signal in the LIDAR, there is a method using one threshold value. However, according to this method, the signal has different shapes in accordance with an amount of reflected light so that it is difficult to calculate an exact timing. That is, a walk error may be incurred. Referring to FIG. 11, it is easily understood that various timings $T_1$ and $T_2$ are calculated in accordance with shapes of the signal.

Even though as a method of calculating a timing of the reflected signal in the LIDAR, there is a method using a plurality of threshold values, the method provides a feedback of the output signal and delays the signal so that circuit complexity is increased.

FIG. 12 is a block diagram illustrating a signal discriminator.

As illustrated in FIG. 12, the signal discriminator 200 includes a first converter 210, a second converter 220, and a signal detector 230. The signal discriminator 200 may omit some components among various components which are exemplarily illustrated in FIG. 12 or may further include other component.

The signal discriminator 200 receives the electrical signal from the photo diode 140 or the trans impedance amplifier. The received electrical signal, that is, an input signal rises or falls by the reflected light. The signal discriminator 200 exactly measures a target timing for the input signal to output the electrical signal.

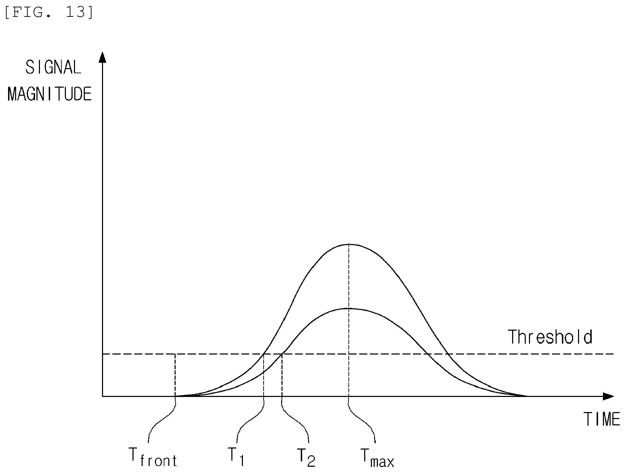

Referring to FIG. 13, the input signal has a front end timing $T_{front}$, target timings $T_1$ and $T_2$ which meet a set threshold value, and a peak timing $T_{max}$ in accordance with the shape of the input signal. The signal discriminator 200 performs two steps of converting process to detect a timing which is the closest to the front end timing $T_{front}$ and the peak timing $T_{max}$.

The first converter 210 converts the input signal so that a signal point having the maximum signal magnitude has a predetermined magnitude. The first converter 210 converts the input signal such that a size of the signal point having the maximum signal magnitude is zero. For example, the first converter 210 differentiates the input signal or converts the input signal using a constant fraction discriminator (CFD). The constant fraction discriminator is a method which finds a timing when a timing when a signal obtained by delaying an original signal is equal to a signal adjusted by a predetermined magnitude ratio becomes a predetermined ratio of the maximum magnitude.

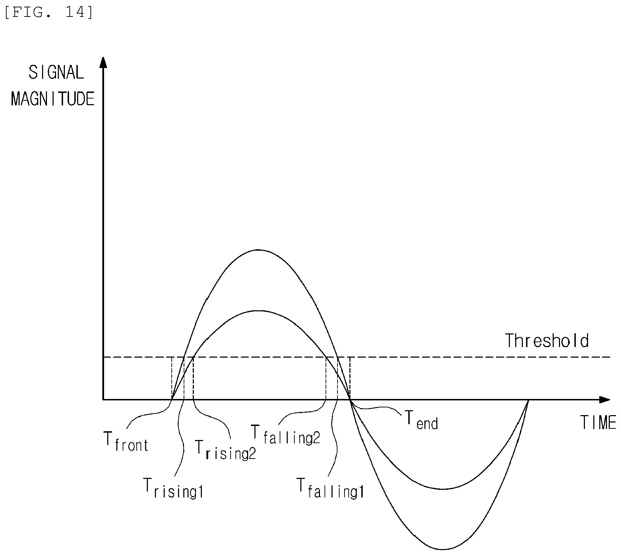

FIG. 14 illustrates a signal obtained by differentiating an input signal with respect to a time. Referring to FIG. 14, the converted signal has a front end timing $T_{front}$, rising timings $T_{rising1}$ and $T_{rising2}$ which meet the set threshold value, falling timings $T_{falling1}$ and $T_{falling2}$ which meet the set threshold value, and a rear end timing Tend. The rear end timing Tend is the same timing as the peak timing $T_{max}$ of the signal before being converted. As illustrated in FIG. 14, when the first converter 210 converts a slope of the input signal such that a signal point having the maximum signal magnitude has a predetermined magnitude, the rising timings $T_{rising1}$ and $T_{rising2}$ are close to the front end timing $T_{front}$ and the falling timings $T_{falling1}$ and $T_{falling2}$ are close to the rear end timing $T_{end}$.

When the signal is differentiated or the constant fraction discriminator is applied to a signal, a zitter is significant and a dynamic range which is a ratio of a maximum signal amplitude and a minimum signal amplitude may be narrow. Since the differential method is implemented by an RC circuit, a frequency characteristic of the signal according to distance change is changed to generate a time error. According to the constant fraction discriminator, slopes of the signal varies so that a charging time of a capacitor of a comparator varies and a response time of the comparator varies, to generate a time error. Therefore, the converted signal needs to be converted again.

The second converter 220 adjusts a magnitude of the converted input signal. The second converter amplifies the magnitude of the converted input signal n times (N is a real number larger than 1). The amplification is repeated N times.

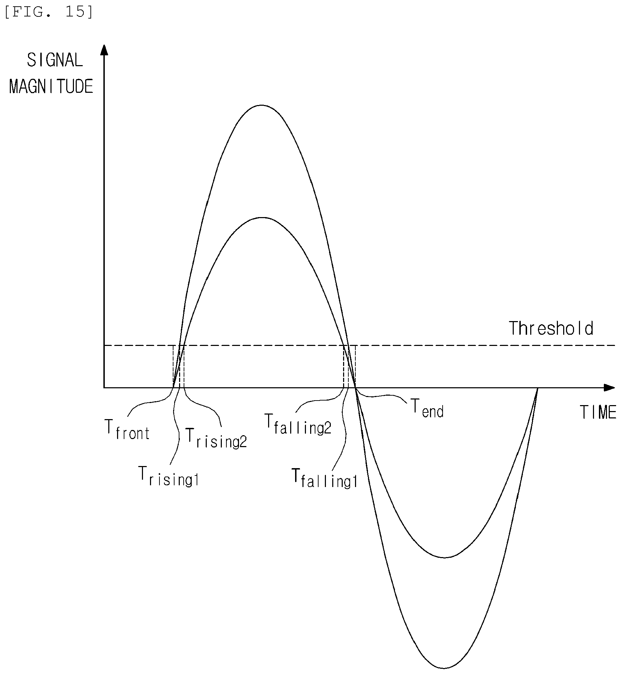

FIG. 15 illustrates a signal obtained by amplifying a magnitude of an input signal whose slope is converted. As illustrated in FIG. 15, when the second converter 220 amplifies a magnitude of a signal whose slope is converted, the slope is close to the vertical, so that the rising timings $T_{rising1}$ and $T_{rising2}$ are close to the front end timing $T_{front}$ and the falling timings $T_{falling1}$ and $T_{falling2}$ are close to the rear end timing $T_{end}$.

According to the exemplary embodiment, even though a circuit which simply compares a signal including a noise with a threshold value, due to two steps of converting process, the front end timing $T_{front}$ and the rear end timing $T_{end}$ may be exactly obtained.

The signal detecting unit 230 detects at least one timing having a predetermined reference magnitude from the input signal with an adjusted magnitude to generate an output signal. The output signal may be a stop control signal. The signal detecting unit 230 outputs a rising edge and a falling edge from the input signal with an adjusted magnitude with respect to one threshold value. The stop control signal may be a pulse matching a rising edge, a pulse matching a falling edge, or a pulse matching both the rising edge and the falling edge.

The distance measuring apparatus 10 corrects the flight time using a pulse width according to the rising edge and the falling edge.

<Time to digital converter>

A method of measuring a flight time includes a phase shifting method, an equivalent time sampling method, a direct measuring method using a high resolution clock, and a time measuring method using a plurality of delay elements. According to the phase shifting method, a transmitting unit consistently transmits a sign wave and a receiving unit measures the flight time using a phase shift. However, the method has a problem in that a sampling rate is restricted according to a period of the sign wave and wrong flight time is calculated due to a cross-talk.

The equivalent time sampling method is applied to an oscilloscope to reconstruct the entire signal by repeatedly reading the signal with a time difference. In this method, the sampling rate is low so that it is restricted to detect an obstacle which moves at a high speed or to be used for a moving object.

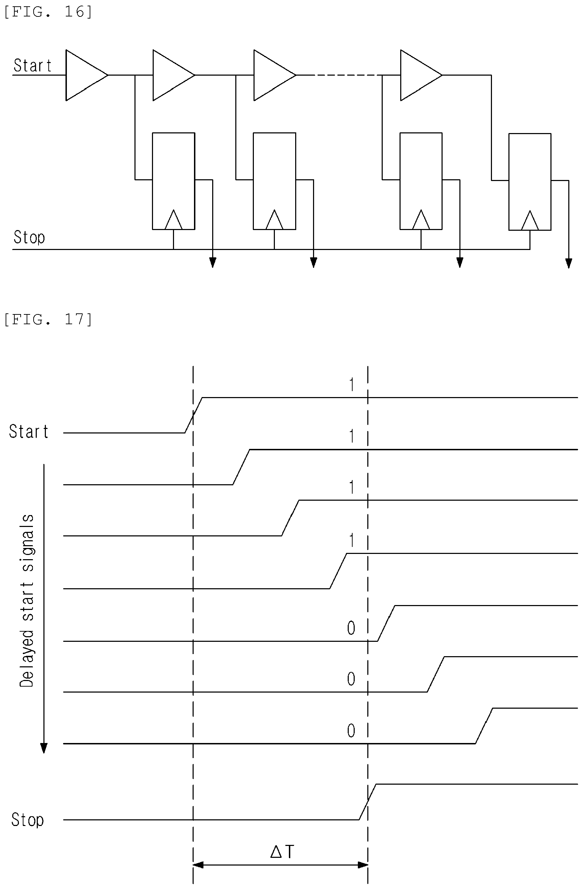

The direct measuring method using a high resolution clock measures a flight time using a clock which operates at several GHz. However, according to this method, the clock speed cannot be physically sufficiently increased, so that there is a limitation in improving a time resolution. According to the time measuring method using a plurality of delay elements, the time difference is calculated using a time to digital converter (TDC). FIG. 16 illustrates a time to digital converter of the related art and FIG. 17 illustrates a signal of a time to digital converter of the related art.

In FIG. 16, a buffer has a time delay of tens to several hundreds of pico seconds (ps). When a flip flop operates using a stop signal, the time delay is equal to the number of flip flops having a value of a logic high 1 in FIG. 17. That is, the sum of delay times has the same value as the flight time. Such a method depends on a time delay through a buffer and cannot have a linear time resolution due to the FPGA characteristic. Further, a large amount of delay lines needs to be sequentially positioned in the FPGA, so that a space for implementing in the FPGA and the number of elements are limited.

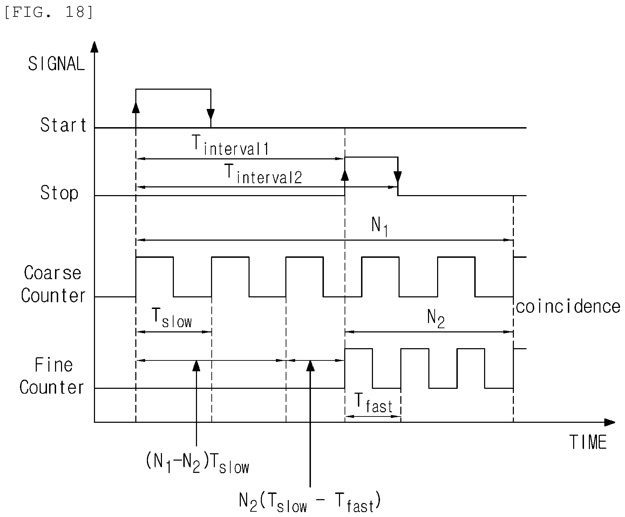

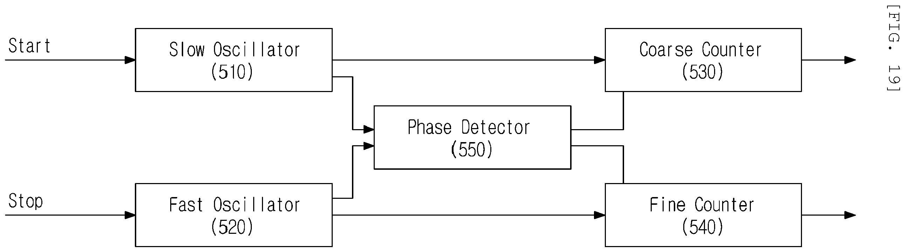

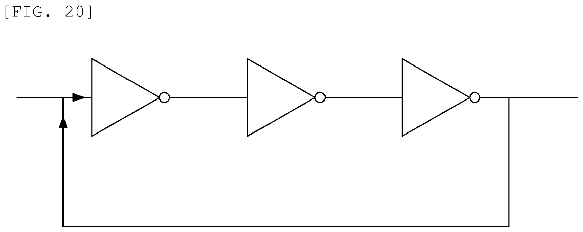

FIG. 18 is a view for explaining an operation of measuring a time by the time to digital converter, FIG. 19 is a block diagram illustrating a time to digital converter, and FIG. 20 is a block diagram illustrating a ring oscillator of a time to digital converter.

The distance measuring unit 300 converts a difference between two times into a digital value using a time to digital converter.

The time to digital converter is a device which coverts time information into a digital code. The time to digital converter generates a digital code corresponding to the time difference between two input signals.

The input signal of the time to digital converter may be a pulse shape of the same signal source or may be an edge of other signal source. For example, the distance measuring apparatus 10 may calculate the time difference based on a rising edge or a falling edge of the start control signal and a rising edge or a falling edge of the stop control signal.

Referring to FIG. 18, the time to digital converter measures a time using (i) numbers $N_1$ and $N_2$ counted by a coarse counter and a fine counter and (ii) a large clock of the coarse counter and a small clock of the fine counter. A time difference between the large clock of the coarse counter and the small clock of the fine counter determines a time resolution of the time to digital converter.

Referring to FIG. 19, the time to digital converter includes a slow oscillator 510, a fast oscillator 520, a coarse counter 530, a fine counter 540, and a phase detector 550.

The slow oscillator 510 generates a first clock by the start control signal. The fast oscillator 520 generates a second clock which is smaller than the first clock, by the stop control signal. That is, the slow oscillator 510 generates a large clock and the fast oscillator 520 generates a small clock.

The coarse counter 530 is connected to the slow oscillator 510 to count the first clock of the slow oscillator 510.

The fine counter 540 is connected to the fast oscillator 520 to count the second clock of the fast oscillator 520.

The phase detector 550 is connected to the slow oscillator 510 and the fast oscillator 520 and also connected to the coarse counter 530 and the fine counter 540 to detect a timing where the first clock and the second clock are synchronized.

The slow oscillator 510 and the fast oscillator 520 may be implemented by a ring oscillator. The ring oscillator is an oscillator in which an inverter and/or a buffer are connected in series in the form of a loop cyclic pattern. The slow oscillator 510 and the fast oscillator 520 may be configured by a time delay element and a buffer. The time delay element may be implemented by a digital element using an inverter or an analog element using a current source.

In FIG. 20, a ring oscillator in which three inverters are sequentially connected is illustrated, but it is merely illustrative and the ring oscillator is not limited thereto and a combination of appropriate logical elements may be used depending on a design to be implemented.

The slow oscillator and the fast oscillator of the related art adjust a clock width by adjusting the number of buffers. The time to digital converter of the related art has a resolution of approximately 80 pico seconds (ps) due to a signal delay time of the buffer.

In the present exemplary embodiments, the clock width of the slow oscillator 510 may be adjusted by changing positions and signal paths of logical elements of the slow oscillator 510 on the circuit. Further, the clock width of the fast oscillator 520 may be adjusted by changing positions and signal paths of logical elements of the fast oscillator 520 on the circuit. That is, the slow oscillator 510 is changed to operate faster and the fast oscillator 520 is changed to be slower. A location and a routing path of each gate may be directly adjusted using a manual gate location adjusting function of a FPGA tool. The slow oscillator 510 and the fast oscillator 520 may be combined by the same logical elements.

According to the present exemplary embodiment, the locations of the gates and the routing paths of the signal of the slow oscillator and the fast oscillator are changed on the circuit to improve a difference between the clock width of the slow oscillator and the clock width of the fast oscillator, that is, the time resolution. The time to digital converter according to the exemplary embodiment of the present disclosure has a resolution of approximately 10 pico seconds (ps).

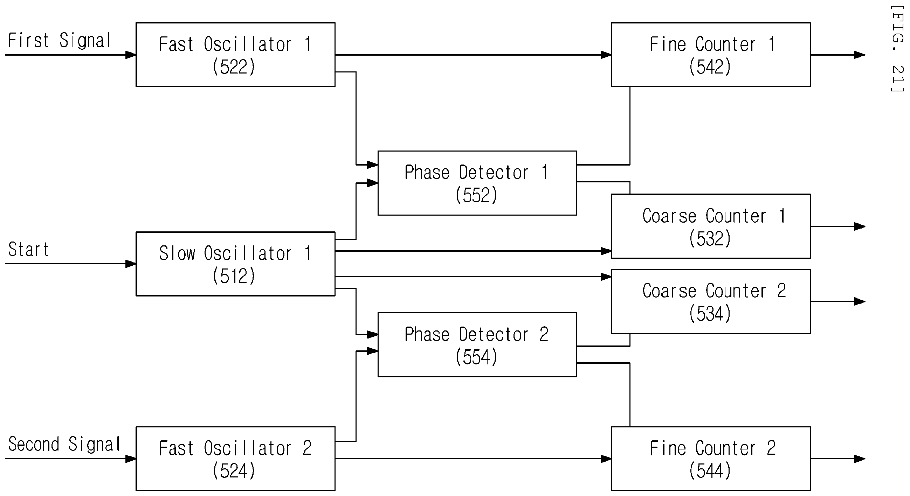

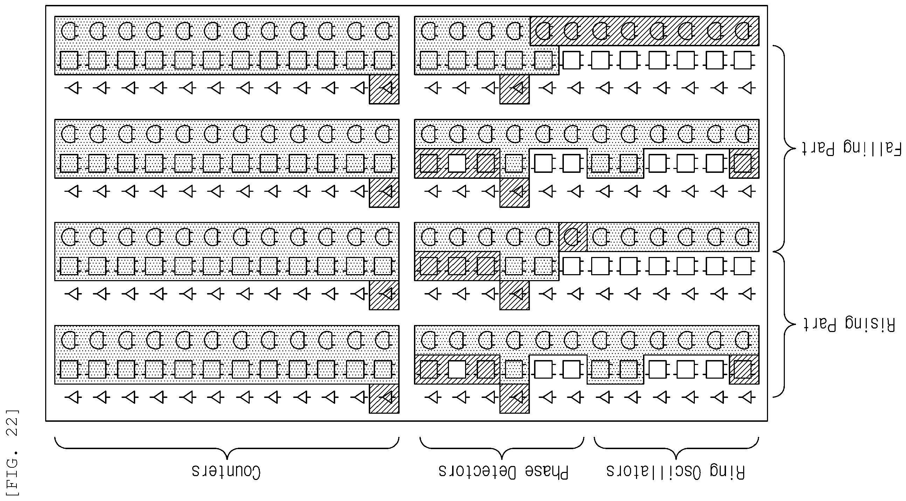

FIG. 21 is a block diagram illustrating a time to digital converter based on two stop control signals and FIG. 22 illustrates that the time to digital converter is exemplarily implemented in the FPGA.

The time discriminator 200 may output a first signal and a second signal. For example, the first signal is a stop control signal according to a rising edge and the second signal is a stop control signal according to a falling edge.

Referring to FIG. 21, the time to digital converter calculates a first time difference based on the start control signal and the first signal. The time to digital converter calculates a second time difference based on the start control signal and the second signal. In the exemplary embodiment, the rising edge and the falling edge are processed together so that the slow oscillator or the fast oscillator may be designed to be shared. That is, the slow oscillator or the fast oscillator is shared on the circuit to calculate the first time difference and the second time difference. The phase detectors 552 and 554 are located to be closer than a predetermined distance from the shared slow oscillator or the shared fast oscillator, to improve the time resolution.

FIG. 22 illustrates a time to digital converter which shares the slow oscillator in which gates which configure three ring oscillators, two phase detectors, and four counters are connected to process the rising edge and the falling edge.

<Correction of flight time>

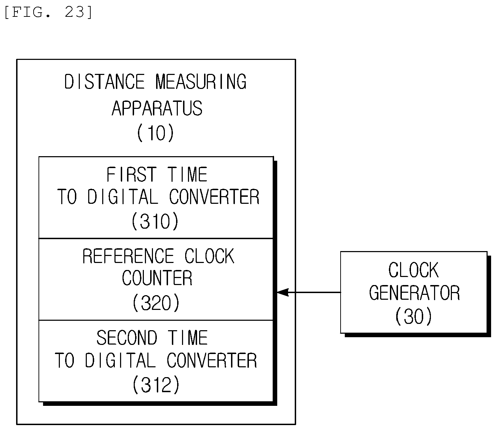

FIG. 23 is a block diagram illustrating a distance measuring apparatus according to another exemplary embodiment of the present disclosure.

A difference of the time delay of each gate may be generated in accordance with a temperature and an applied voltage of the FPGA. The frequency of the ring oscillator is changed due to the temperature and the applied voltage and a minute deviation may be generated in the resolution. The deviation causes an error of the flight time.

In order to monitor and correct the error of the flight time, the distance measuring unit includes a reference clock counter 320 which counts a reference clock received from the external clock generator 30 and counts an internal clock generated in the internal oscillator.

The clock generator 30 may be implemented by a high precision crystal generator. The high precision crystal generator may transmit the generated clock to the reference clock counter 320. When every x-th clock input is received, the reference clock counter 320 stores the number of clocks calculated by the ring oscillator in an internal buffer. The distance measuring apparatus 10 periodically reads the number of stored clocks and corrects the flight time. An algorithm of correcting the flight time is as follows.

```
00: [ticks_per_x_crystal_clock] = ReferenceClockCounterModule (clock_from_external_crystal)
01: cnt = 0
02: while (positive edge of external clock)
03:   cnt = cnt + 1
```

```
04:   if(cnt == x)
05:     ticks_per_x_crystal_clock= cnt
06:        cnt = 0
07:   endif
08: endwhile
```

The distance measuring unit corrects the flight time using a ratio of the number of reference clocks and the number of internal clocks. ticks_per_x_crystal_clock is calculated at real time and is stored in a calibration step which is performed immediately before shipment of the implementation product. The correction of the flight time using the ratio of the number of stored reference clocks and the number of internal clocks is represented by Equation 1.

[Equation 1]

$$t\,{}^{compensated}_{tof} = \alpha t_{tof}$$

A correction factor $\alpha$ is a value obtained by dividing ticks_per_x_crystal_clock_runtime by ticks_per_x_crystal_clock_stored_during_calibration_process.

Referring to FIG. 23, the distance measuring apparatus 10 includes a plurality of time to digital converters 310 and 312 and the reference clock counter 320 is located between the plurality of time to digital converter 310 and 312. The clock generator 30 which generates the reference clock may be included in the moving object 1. Since the reference clock counter 320 is in contact with the time to digital converter or located within a predetermined distance therefrom, the reference clock counter 320 has almost the same temperature and voltage characteristic as the oscillator used for the time to digital converter. The internal clock also changes in accordance with the temperature and the voltage. According to the exemplary embodiment, the internal clock is not divided so that a high precision may be maintained.

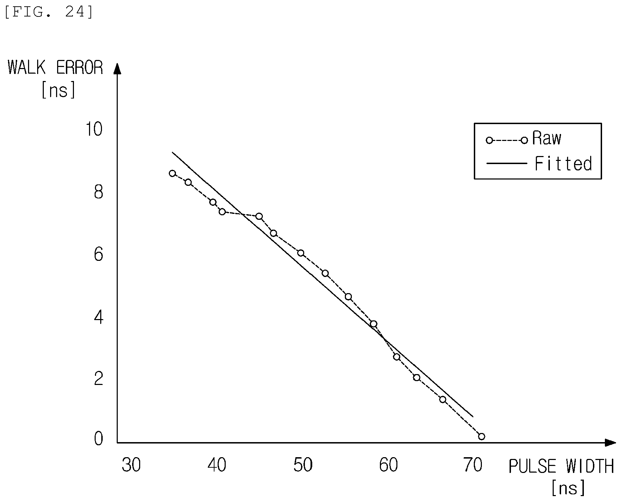

FIG. 24 is a view for explaining an operation of correcting a time by a distance measuring apparatus according to another exemplary embodiment of the present disclosure.

When a differentiation method in which the distance measuring apparatus 10 is implemented by an RC circuit during a process of converting a slope of the signal, a frequency characteristic of the signal in accordance with the distance change is changed to cause a time error. When a constant fraction discriminator is applied during the process of converting the slope of the signal, charging times of the capacitors of the comparator may vary due to the different slopes of the signal and the time error is incurred due to the different response times of the comparator. Therefore, the distance measuring apparatus 10 performs the process of correcting the time error.

The distance measuring unit 300 corrects the flight time using the pulse width of the stop control signal. Generally, since the change in the pulse width of the output signal of the photo diode is severe, it is difficult to use if a pulse width verses a walk error is not close at the time of one to N matching. According to the exemplary embodiment, the process of converting a signal is performed so that the relationship between the pulse width and the walk error may be simply modeled.

The distance measuring unit 300 models a function between the walk error and the pulse width and measures a correction factor in advance. The correction factor in accordance with the pulse width is illustrated in FIG. 14. As illustrated in FIG. 14, the distance measuring unit 300 applies a correction factor which is inverse proportion to the pulse width to correct the flight time. When the pulse width is narrowed due to the weak reflected signal, the walk error is increased so that the distance measuring unit 300 sets the correction factor to be large. When the pulse width is widened due to the strong reflected signal, the walk error is reduced so that the distance measuring unit 300 sets the correction factor to be small.

A relationship equation of the flight time is represented by Equation 2.

[Equation 2]

$$t_{tof} = t_{falling} + f_{comp}(t_{pulse})$$

In Equation 2, $t_{tof}$ is a corrected flight time and $t_{falling}$ is a flight time before being corrected. The flight time is a time difference between the stop control signal and the start control signal. The distance measuring apparatus may calculate the time difference based on a rising edge or a falling edge of the start control signal and a rising edge or a falling edge of the stop control signal. $f_{comp}$ is a function of a pulse width verses walk error and $t_{pulse}$ is a pulse width of a signal. The distance measuring apparatus may calculate a pulse width based on the rising edge or the falling edge of the stop control signal.

Even though components included in the moving object and the distance measuring apparatus are separately illustrated in the individual drawings, the plurality of components is coupled to each other to be implemented by at least one module. The components are connected to a communication path which connects a software module or a hardware module in the apparatus to organically operate between the components. The components communicate with each other using one or more communication buses or signal lines.

The moving object and the distance measuring apparatus may be implemented in a logic circuit by hardware, firm ware, software, or a combination thereof or may be implemented using a general purpose or special purpose computer. The apparatus may be implemented using hardwired device, field programmable gate ware (FPFA) or application specific integrated circuit (ASIC). Further, the apparatus may be implemented by a system on chip (SoC) including one or more processors and a controller.

The moving object and the distance measuring apparatus may be mounted in a computing device provided with a hardware element as a software, a hardware, or a combination thereof. The computing device may refer to various devices including all or some of a communication device for communicating with various devices and wired/wireless communication networks such as a communication modem, a memory which stores data for executing programs, and a microprocessor which executes programs to perform operations and commands.

In each of the drawings, the respective processes are sequentially performed, but this is merely illustrative and those skilled in the art may apply various modifications and changes by changing the order illustrated in the drawings or performing one or more processes in parallel or adding another process without departing from the essential gist of the exemplary embodiment of the present disclosure.

The operation according to the exemplary embodiment of the present disclosure may be implemented as a program command which may be executed by various computers to be recorded in a computer readable medium. The computer readable medium indicates an arbitrary medium which participates to provide a command to a processor for execution. The computer readable medium may include solely a program command, a data file, and a data structure or a combination thereof. For example, the computer readable medium may include a magnetic medium, an optical recording medium, and a memory. The computer program may be distributed on a networked computer system so that the computer readable code may be stored and executed in a distributed manner. Functional programs, codes, and code segments for implementing the present embodiment may be easily inferred by programmers in the art to which this embodiment belongs.

The present embodiments are provided to explain the technical spirit of the present embodiment and the scope of the technical spirit of the present embodiment is not limited by these embodiments. The protection scope of the present embodiments should be interpreted based on the following appended claims and it should be appreciated that all technical spirits included within a range equivalent thereto are included in the protection scope of the present embodiments.

**Claims**

1. A distance measuring apparatus, comprising:

   an optical transceiver which emits light to a target by a start control signal and receives light reflected from the target to convert the reflected light into an electrical signal;
   a signal discriminator which converts the electrical signal to generate a stop control signal; and
   a distance measuring unit which measures a distance by calculating a flight time using a time to digital converter which adjusts a position of a logical element included in an oscillator, based on a time difference of the start control signal and the stop control signal.

2. The distance measuring apparatus according to claim 1, wherein the time to digital converter includes:

   a slow oscillator which generates a first clock;
   a fast oscillator which generates a second clock which is smaller than the first clock;
   a coarse counter which counts the first clock of the slow oscillator;
   a fine counter which counts the second clock of the fast oscillator; and
   a phase detector which detects a timing when the first clock and the second clock are synchronized.

3. The distance measuring apparatus according to claim 2, wherein the slow oscillator and the fast oscillator are combined by the same logical elements.

4.  The distance measuring apparatus according to claim 2, wherein on a circuit, a clock width of the slow oscillator is adjusted by changing positions and a signal path of the logical elements of the slow oscillator and a clock width of the fast oscillator is adjusted by changing positions and a signal path of the logical elements of the fast oscillator to adjust a difference between the clock width of the slow oscillator and the clock width of the fast oscillator.

5.  The distance measuring apparatus according to claim 2, wherein the signal discriminator outputs a first signal and a second signal and the time to digital converter calculates a first time difference based on the first signal and a second time difference based on the second signal, and shares the slow oscillator or the fast oscillator in the circuit to calculate the first time difference and the second time difference.

6.  The distance measuring apparatus according to claim 5, wherein the phase detector is positioned to be closer than a predetermined distance from the shared slow oscillator or the shared fast oscillator.

7.  The distance measuring apparatus according to claim 1, wherein the distance measuring unit includes a reference clock counter which counts a reference clock received from an external clock generator and counts an internal clock generated in an internal oscillator, and corrects the flight time using a ratio of the number of reference clocks and the number of internal clocks.

8.  The distance measuring apparatus according to claim 7, wherein the distance measuring unit includes a plurality of time to digital converters and the reference clock counter is located between the plurality of time to digital converters.

9.  A time to digital converter, comprising:

    a slow oscillator which generates a first clock;
    a fast oscillator which generates a second clock which is smaller than the first clock;
    a coarse counter which counts the first clock of the slow oscillator;
    a fine counter which counts the second clock of the fast oscillator; and
    a phase detector which detects a timing when the first clock and the second clock are synchronized.

10. The time to digital converter according to claim 9, wherein on a circuit, a clock width of the slow oscillator is adjusted by changing positions and a signal path of the logical elements of the slow oscillator and a clock width of the fast oscillator is adjusted by changing positions and a signal path of the logical elements of the fast oscillator to adjust a difference between the clock width of the slow oscillator and the clock width of the fast oscillator.

11. The time to digital converter according to claim 9, wherein the time to digital converter calculates a first time difference based on the first signal and a second time difference based on the second signal, and shares the slow oscillator or the fast oscillator in the circuit to calculate the first time difference and the second time difference.

12. The time to digital converter according to claim 9, wherein the phase detector is positioned to be closer than a predetermined distance from the shared slow oscillator or the shared fast oscillator.

13. A moving object, comprising:

    a distance measuring apparatus which calculates a flight time between a moving object and a target to measure a distance to the target; and
    a moving device which is implemented to move the moving object based on the distance to the target,
    wherein the distance measuring apparatus includes:

        an optical transceiver which emits light to a target by a start control signal and receives light reflected from the target to convert the reflected light into an electrical signal;
        a signal discriminator which converts the electrical signal to generate a stop control signal; and
        a distance measuring unit which measures a distance by calculating a flight time using a time to digital converter which adjusts a position of a logical element included in an oscillator, based on a time difference of the start control signal and the stop control signal.

14. The moving object according to claim 13, wherein the time to digital converter includes:

a slow oscillator which generates a first clock;

a fast oscillator which generates a second clock which is smaller than the first clock;

a coarse counter which counts the first clock of the slow oscillator;

a fine counter which counts the second clock of the fast oscillator; and

a phase detector which detects a timing when the first clock and the second clock are synchronized.

15. The moving object according to claim 13, wherein the moving object includes a clock generator which generates a reference clock, the distance measuring unit includes a reference clock counter which counts a reference clock received from the clock generator and counts an internal clock generated in an internal oscillator, and the distance measuring unit corrects the flight time using a ratio of the number of reference clocks and the number of internal clocks.

[FIG. 1]

```
┌─────────────────────────────────────────────┐
│            MOVING OBJECT                      │
│                (1)                            │
│   ┌───────────────────────────────────────┐  │
│   │  DISTANCE MEASURING APPARATUS         │  │
│   │             (10)                      │  │
│   └───────────────────────────────────────┘  │
│                    │                          │
│   ┌───────────────────────────────────────┐  │
│   │         MOVING DEVICE                 │  │
│   │             (20)                      │  │
│   └───────────────────────────────────────┘  │
└─────────────────────────────────────────────┘
```

[FIG. 2]

[FIG. 3]

[FIG. 4]

DISTANCE MEASURING APPARATUS
(10)

OPTICAL TRANSCEIVER
(100)

SIGNAL DISCRIMINATOR
(200)

DISTANCE MEASURING UNIT
(300)

[FIG. 5]

[FIG. 6]

[FIG. 7]

OPTICAL TRANSCEIVER
(100)

LIGHT SOURCE
(110)

TRANSMISSION
OPTICAL UNIT
(120)

PHOTO DIODE
(140)

RECEPTION
OPTICAL UNIT
(130)

[FIG. 8]

OPTICAL TRANSCEIVER
(100)

LIGHT SOURCE
(110)

PHOTO DIODE
(140)

SIGNAL CONVERTER
(150)

[FIG. 9]

[FIG. 10]

[FIG. 11]

SIGNAL
MAGNITUDE

Threshold

TIME

$T_1$    $T_2$

[FIG. 12]

SIGNAL DISCRIMINATOR
(200)

FIRST CONVERTER
(210)

SECOND CONVERTER
(220)

SIGNAL DETECTOR
(230)

[FIG. 13]

[FIG. 14]

[FIG. 15]

[FIG. 16]

[FIG. 17]

[FIG. 18]

[FIG. 19]

[FIG. 20]

[FIG. 21]

[FIG. 22]

[FIG. 23]

DISTANCE MEASURING
APPARATUS
(10)

FIRST TIME
TO DIGITAL CONVERTER
(310)

REFERENCE CLOCK
COUNTER
(320)

SECOND TIME
TO DIGITAL CONVERTER
(312)

CLOCK
GENERATOR
(30)

[FIG. 24]

Europäisches
Patentamt

European
Patent Office

Office européen
des brevets

# EUROPEAN SEARCH REPORT

Application Number

EP 18 18 7982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | US 2018/149753 A1 (SHIN KYUNG CHUL [KR] ET AL) 31 May 2018 (2018-05-31)<br>* abstract; figures 1-9,11-13,19-23,30-32,34,36,38,54 *<br>* page 2, paragraph 20 - page 3, paragraph 31 *<br>* page 10, paragraph 162 *<br>* page 11, paragraphs 169,179 *<br>* page 12, paragraph 191 - page 14, paragraph 232 *<br>* page 13, paragraph 211 *<br>* page 21, paragraph 364-365 *<br>----- | 1-15 | INV.<br>G01S7/481<br>G01S17/88<br>G01S5/16<br>G01S13/86<br>G01S13/87<br>G01S13/88<br>G01S17/42<br>G01S17/89<br>G01S17/93<br>G01S7/48<br>G01S7/486 |
| A | CN 101 856 208 A (VORWERK CO INTERHOLDING) 13 October 2010 (2010-10-13)<br>* abstract; figures 1-7 *<br>----- | 1-15 | |
| A | US 2014/111812 A1 (BAEG SEUNG-HO [KR] ET AL) 24 April 2014 (2014-04-24)<br>* abstract; figures 1-3 *<br>----- | 1-15 | |
| | | | TECHNICAL FIELDS SEARCHED (IPC)<br><br>G01S |

The present search report has been drawn up for all claims

| Place of search | Date of completion of the search | Examiner |
|---|---|---|
| Munich | 21 December 2018 | Cordeiro, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 7982

This annex lists the patent family members relating to the patent documents cited in  the above-mentioned European search report.
The members are as contained in the European Patent Office EDP file on
The European Patent Office is in no way liable for these particulars which are merely given for the purpose of information.

21-12-2018

| Patent document cited in search report | | Publication date | Patent family member(s) | | Publication date |
|---|---|---|---|---|---|
| US 2018149753 | A1 | 31-05-2018 | NONE | | |
| CN 101856208 | A | 13-10-2010 | CN 101856208 A | | 13-10-2010 |
| | | | DE 102009023066 A1 | | 07-10-2010 |
| | | | EP 2236069 A2 | | 06-10-2010 |
| US 2014111812 | A1 | 24-04-2014 | CN 103608696 A | | 26-02-2014 |
| | | | US 2014111812 A1 | | 24-04-2014 |
| | | | WO 2013176362 A1 | | 28-11-2013 |

EPO FORM P0459

For more details about this annex : see Official Journal of the European Patent Office, No. 12/82